# EUROPEAN PATENT APPLICATION

(11) **EP 4 124 250 A1**
(43) Date of publication of application: **01.02.2023**
(21) Application number: 22187611.3
(22) Date of filing: 28.07.2022
(51) Int. Cl.: A24F 40/40

(54) **ATOMIZER AND ELECTRONIC ATOMIZATION DEVICE HAVING THE SAME**

(30) Priority: 29.07.2021 CN 202121758916 U
(71) Applicant: Shenzhen Smoore Technology Limited, Shenzhen, Guangdong 518102 (CN)
(72) Inventor: WU, Juntao, Shenzhen, 518102 (CN)
(74) Representative: Manitz Finsterwald Patent- und Rechtsanwaltspartnerschaft mbB

(57) **Abstract**

An atomizer includes a housing, an atomization base, and an atomization core. The housing includes a side wall and a bottom wall connected to the side wall. The side wall and the bottom wall form an accommodation cavity, the bottom wall includes an inner bottom surface, and an air inlet is provided on the side wall. The atomization base is located in the accommodation cavity and is adjacent to the inner bottom surface. There is a gap between the atomization base and the bottom wall, an air inlet hole is provided on the atomization base, and the air inlet hole is in communication with the air inlet through the gap. The atomization core is located in the accommodation cavity and is mounted on the atomization base, where the atomization core is in communication with the air inlet hole.

## Description

### TECHNICAL FIELD

The present invention relates to the field of atomization technologies, and in particular, to an atomizer and an electronic atomization device having the same.

### BACKGROUND

Electronic atomization device is an electronic product that generates aerosol by heating an atomizing medium. The electronic atomization device generally includes an atomizer and a power supply assembly. The atomizer includes components such as a base, a liquid storage tank, a heating body, a liquid guide body, and a silicone sealant, where the liquid storage tank is in communication with the liquid guide body, the liquid guide body is in contact with the heating body, the heating body is mounted on the base, and the base is connected to the power supply assembly. During use, the atomizer guides the atomizing medium in the liquid storage tank to the heating body through the liquid guide body for heating, so that the atomizing medium is atomized to generate aerosol, and then the aerosol is outputted from an air outlet channel together with air entering through an air inlet hole, for a user to inhale.

However, condensed liquid formed during use of the conventional atomizer is likely to flow towards the air inlet hole due to the gravity and/or other forces, and consequently, a short circuit of a microphone and a battery cell of a battery assembly is likely to occur, which may block the flow of air and cause a potential safety hazard.

### SUMMARY

Accordingly, it is necessary to provide a safer atomizer and electronic atomization device. An atomizer includes:
a housing including a side wall and a bottom wall connected to the side wall, wherein the side wall and the bottom wall form an accommodation cavity, the bottom wall includes an inner bottom surface, and an air inlet is provided on the side wall;
an atomization base located in the accommodation cavity and adjacent to the inner bottom surface, wherein a gap is formed between the atomization base and the bottom wall, an air inlet hole is provided on the atomization base, and the air inlet hole is in communication with the air inlet through the gap; and
an atomization core located in the accommodation cavity and mounted on the atomization base, wherein the atomization core is in communication with the air inlet hole.

The aforementioned atomizer includes the housing, the atomization base, and the atomization core. The air inlet is provided on the side wall of the housing, so that liquid flowing out of the air inlet hole cannot flow towards a battery assembly through the air inlet, and the battery assembly is less prone to short circuits, which increases the safety performance. In addition, since the air inlet is not in direct communication with the air inlet hole but is in communication with the air inlet hole through the gap between the atomization base and a base, the air inlet hole is not likely to be blocked by the liquid to cause poor flow of air.

In an embodiment, a liquid storage groove is provided on one side of the atomization base adj acent to the inner bottom surface, liquid flowing out of the air inlet hole is capable of flowing into the liquid storage groove under a capillary force.

In an embodiment, a liquid storage groove and a liquid guide trench are provided on one side of the atomization base adjacent to the inner bottom surface, the liquid guide trench is located between the air inlet hole and the liquid storage groove, and the liquid guide trench is configured to guide liquid flowing out of the air inlet hole into the liquid storage groove.

In an embodiment, an opening of the liquid storage groove faces the inner bottom surface, and a spacing is formed between a side of the liquid storage groove adjacent to the inner bottom surface and the inner bottom surface.

In an embodiment, the housing comprises a top cover and a bottom cover, the top cover is detachably connected to the bottom cover, the top cover and the bottom cover cooperatively form the accommodation cavity configured to accommodate the atomization base and the atomization core, the inner bottom surface is a surface of the bottom cover adjacent to the atomization base; the liquid storage groove comprises an opening facing the bottom cover, a spacing is formed between a side of the liquid storage groove adjacent to the bottom cover and the bottom cover, and the air inlet is located on a side wall of the bottom cover, on a side wall of the top cover, or at a joint between the top cover and the bottom cover.

In an embodiment, the bottom cover has a hollow structure with one end opened and the other end closed; the atomization base is located inside the bottom cover, a side wall of the atomization base is sealingly connected to an inner side wall of the bottom cover, and a side of the atomization base adjacent to the bottom cover and the bottom cover form an air inlet channel; and the air inlet is located on the side wall of the bottom cover and is in communication with the air inlet channel, and the air inlet channel is in communication with the air inlet hole.

In an embodiment, the air inlet hole is located in a middle portion of the atomization base, and an air groove is provided on a side of the atomization base adjacent to the bottom cover; the air groove is in communication with the liquid guide trench, a groove wall of the air groove is in contact with the bottom cover to form the air inlet channel, the air groove is provided with a notch on the groove wall of the air groove adjacent to the air inlet hole, and the notch is configured to communicate the air inlet channel with both the opening of the liquid storage groove and the air inlet hole.

In an embodiment, a cross-section of the housing is elliptical, and an orthographic projection of the air inlet on the cross-section of the housing is located on a major axis of the elliptical cross-section.

In an embodiment, two air inlets are provided, and orthographic projections of the two air inlets on the cross-section of the housing coincide with endpoints of the major axis.

In an embodiment, the atomization core comprises a heating assembly and a liquid storage tank configured to load an atomizing medium; the heating assembly is mounted on the atomization base, the heating assembly is configured to atomize the atomizing medium in the liquid storage tank, the heating assembly and the atomization base cooperatively form an atomization cavity; the air inlet hole is in communication with the atomization cavity, the housing is further provided with an air outlet, and the air outlet is in communication with the atomization cavity.

In an embodiment, the heating assembly comprises a liquid guide member and a heating member; the heating member is mounted on the atomization base, the liquid guide member is located between the liquid storage tank and the heating member; and the atomizing medium in the liquid storage tank reaches the heating member through the liquid guide member and is atomized by the heating member.

In an embodiment, the liquid storage tank comprises a tank housing and a tank cover; the tank housing comprises a liquid storage cavity having an exit; the tank cover is located on the atomization base, and the tank cover is sealingly connected to the tank housing and covers the exit; a liquid outlet channel is provided on the tank cover, the liquid outlet channel comprises a liquid inlet and a liquid outlet, the liquid inlet is in communication with the exit; an edge of the liquid guide member is sealingly connected to an end of the liquid outlet channel adjacent to the liquid outlet.

In an embodiment, the liquid guide member is a porous ceramic body.

In an embodiment, an air outlet channel is provided on the tank cover and/or the atomization base, the atomization cavity is in communication with the air outlet channel, and the air outlet channel is in communication with the air outlet.

An electronic atomization device includes the foregoing atomizer and a battery assembly electrically connected to the atomization core of the atomizer.

### BRIEF DESCRIPTION OF THE DRAWINGS

FIG. 1 is a front view of an electronic atomization device according to an embodiment.
FIG. 2 is a cross-sectional view of the electronic atomization device shown in FIG. 1.
FIG. 3 is a perspective view of an atomizer of the electronic atomization device shown in FIG. 1.
FIG. 4 is an exploded view of the atomizer shown in FIG. 3.
FIG. 5 is a perspective view of an atomization base of the atomizer shown in FIG. 3.
FIG. 6 is a cross-sectional view of the atomizer shown in FIG. 3.
FIG. 7 is another cross-sectional view of the atomizer shown in FIG. 3.

Reference numerals:
10 - Electronic atomization device; 100 - Atomizer; 200 - Battery assembly; 110 - Housing; 120 - Atomization base; 130 - Atomization core; 111 - Inner bottom surface; 112 - Air inlet; 121 - Air inlet hole; 122 - Liquid storage groove; 123 - Liquid guide trench; 113 - Top cover; 114 - Bottom cover; 124 - Air groove; 131 - Liquid storage tank; 132 - Heating assembly; 133 - Atomization cavity; 115 - Air outlet; 134 - Liquid guide member; 135 - Heating member; 131a - Tank housing; 131b - Tank cover; 131c - Liquid storage cavity; 131d - Liquid outlet channel; 136 - First sealing member; 137 - Second sealing member; 210 - Power supply; 220 - Battery case; 231 - Ejector pin; and 116 - Third channel.

### DETAILED DESCRIPTION

To help understand the invention, the following describes the invention more comprehensively with reference to the related accompanying drawings. The accompanying drawings show some embodiments of the invention. However, the invention may be implemented in many different forms, and is not limited to the embodiments described in this specification. On the contrary, the embodiments are provided to make the disclosed content of the invention more comprehensive.

It should be noted that, when a component is expressed as "be fixed to" another component, the component may be directly on the another component, or one or more intermediate components may exist between the component and the another component. When one component is expressed as "be connected to" another component, the component may be directly connected to the another component, or one or more intermediate components may exist between the component and the another component. When orientation or position relationships indicated by terms such as "vertical", "horizontal", "left", "right", "upper", "lower", "inside", "outside", and "bottom" are based on orientation or position relationships shown in the accompanying drawings, and are used merely for ease of description, rather than indicating or implying that the mentioned apparatus or component needs to have a particular orientation or needs to be constructed and operated in a particular orientation. Therefore, such terms should not be construed as limiting of this application. In addition, terms such as "first", and "second" are merely intended for a descriptive purpose and cannot be understood as indicating or implying relative importance.

Unless otherwise defined, meanings of all technical and scientific terms used in this specification are the same as those usually understood by a person skilled in the art to which the present invention belongs. In this specification, terms used in the specification of the present invention are merely intended to describe objectives of the specific embodiments, but are not intended to limit the present invention.

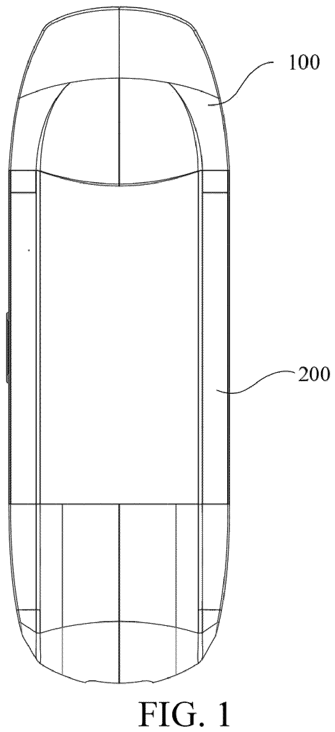

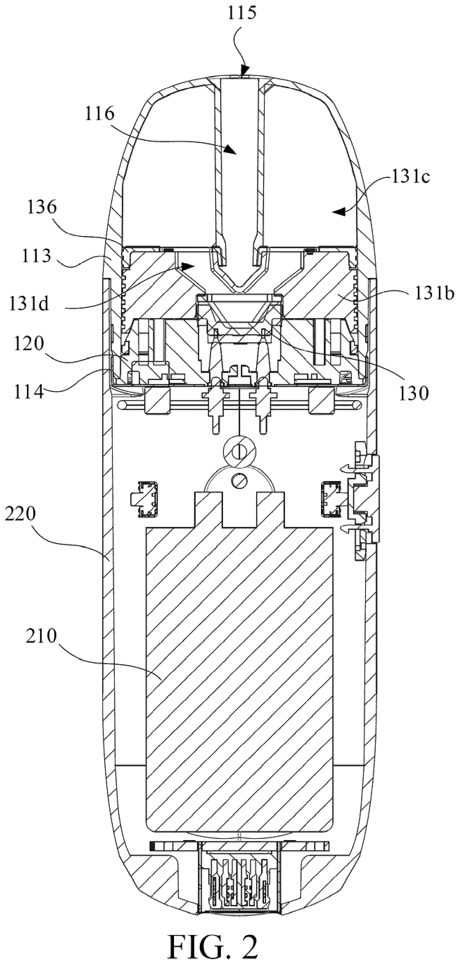

Referring to FIG. 1 and FIG. 2, an embodiment of the present application provides an electronic atomization device 10. The electronic atomization device 10 includes an atomizer 100 and a battery assembly 200. The battery assembly 200 is electrically connected to the atomizer 100, and the battery assembly 200 supplies power for the atomizer 100.

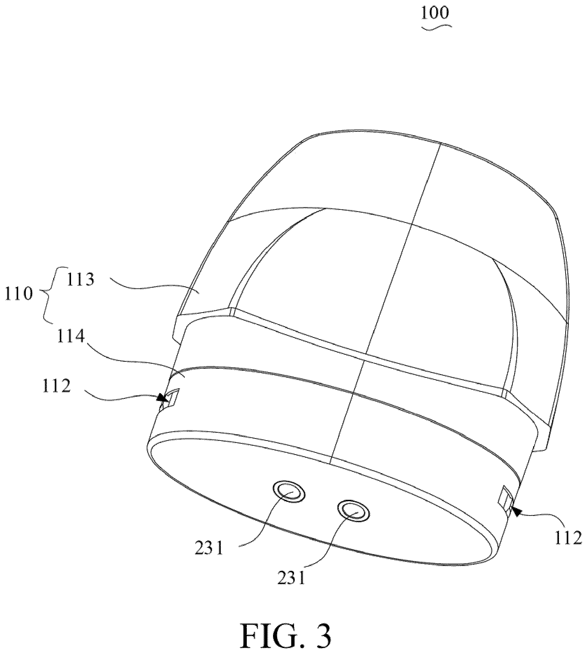

Specifically, referring to FIG. 3 to FIG. 5 together, the atomizer 100 is configured to atomize a fluid atomizing medium (for example, an e-cigarette liquid). The atomizer 100 includes a housing 110, an atomization base 120, and an atomization core 130 mounted on the atomization base 120. The housing 110 includes a side wall and a bottom wall connected to the side wall. The bottom wall includes an inner bottom surface 111, and the side wall is provided with an air inlet 112. The side wall and the bottom wall cooperatively form an accommodation cavity. The atomization base 120 and the atomization core 130 are both located in the accommodation cavity. The atomization base 120 is located adjacent to the inner bottom surface 111. There is a gap formed between the atomization base 120 and the bottom wall, and an air inlet hole 121 is provided on the atomization base 120. The air inlet 112 is in communication with the air inlet hole 121 through the gap between the atomization base 120 and the bottom wall, and the air inlet hole 121 is in communication with the atomization core 130.

During use of the atomizer 100, external air enters the atomizer 100 through the air inlet 112 and then flows into the atomization core 130 through the gap between the atomization base 120 and the bottom wall, and the air inlet hole 121 sequentially. After the atomizing medium is atomized into aerosol by the atomization core 130, the aerosol flows out of an air outlet 115 along with the air in the atomization core 130. In the foregoing atomizer 100, the air inlet 112 is provided on the side wall of the housing, and the air inlet 112 is not in direct communication with the air inlet hole 121 but is in communication with the air inlet hole 121 through the gap between the atomization base 120 and the bottom wall. Compared with a conventional atomizer, the foregoing atomizer 100 prevents condensed liquid formed by atomizing the atomizing medium by the atomization core from flowing out of the air inlet hole 121 and flowing towards the battery assembly 200 through the air inlet 112, so that short circuit of the battery assembly 200 caused by condensed liquid generated during use can be avoided. In addition, since the air inlet 112 is not in direct communication with the air inlet hole 121 but is in communication with the air inlet hole 121 through the gap between the atomization base 120 and the bottom wall, the air inlet 112 or an air inlet channel is not likely to be blocked by the condensed liquid to cause poor flow of air.

In some embodiments, the air inlet 112 is located adjacent to the bottom wall. In some embodiments, the housing 110 further includes a top wall, which is opposite to the bottom wall and is connected to the side wall. The side wall, the bottom wall, and the top wall cooperatively form the accommodation cavity. In this case, the air inlet 112 may alternatively be provided on the top wall.

In the illustrated embodiment, the air inlet 112 is in a shape of a square. In other embodiments, the shape of the air inlet 112 is not limited to square, and may alternatively be another shape, such as a circle.

In the illustrated embodiment, a cross-section of the housing 110 is elliptical, and an orthographic projection of the air inlet 112 on the cross-section of the housing 110 is located on a major axis of the elliptical cross-section of the housing 110. In the illustrated embodiment, there are two air inlets 112, and orthographic projections of the two air inlets 112 on the cross-section of the housing 110 coincide with two endpoints of the major axis. It should be understood that, in other embodiments, the shape of the cross-section of the housing 110 is not limited to an ellipse, and may also be any other shape such as a rectangle, a circle, or a polygon. In other embodiments, when the cross-section of the housing 110 is elliptical, a position of the air inlet 112 is not limited to the above, and may alternatively be other positions on the housing 110. For example, the orthographic projection of the air inlet 112 on the cross-section of the housing 110 is adjacent to an endpoint of the major axis, is adjacent to an endpoint of a minor axis, or coincides with the endpoint of the minor axis. It should be understood that, in other embodiments, the number of air inlets 112 is not limited to two, and may alternatively be another value, for example, one or any integer greater than two.

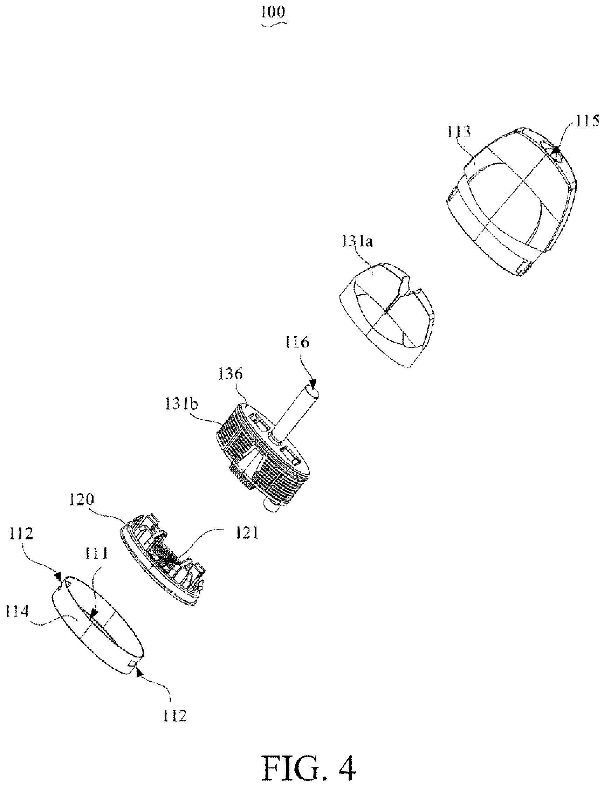

Referring to FIG. 4, in one embodiment, the housing 110 includes a top cover 113 and a bottom cover 114. The top cover 113 is detachably connected to the bottom cover 114. As used herein, the detachable connection includes, but is not limited to, at least one of a buckle connection, a threaded connection, or a magnetic connection. The top cover 113 and the bottom cover 114 cooperatively form an accommodation cavity for accommodating the atomization base 120 and the atomization core 130. The atomization base 120 is located inside the bottom cover 114, and a surface of the bottom cover 114 facing the atomization base 120 is the inner bottom surface 111. In the illustrated embodiment, the air inlet 112 is located on a side wall of the bottom cover 114. In other embodiments, the air inlet 112 may be located on a side wall of the top cover 113, or the air inlet 112 may be located at a joint between the top cover 113 and the bottom cover 114. When the air inlet 112 is located at the joint between the top cover 113 and the bottom cover 114, a through hole is provided on each of the top cover 113 and the bottom cover 114, and the through hole of the top cover 113 and the through hole of the bottom cover 114 are communicated to form the air inlet 112. It should be understood that, in some embodiments, the top cover 113 may be omitted. In that case, an end of a tank housing 131a adjacent to a tank cover 131b is detachably connected to the bottom cover 114 to form the housing 110.

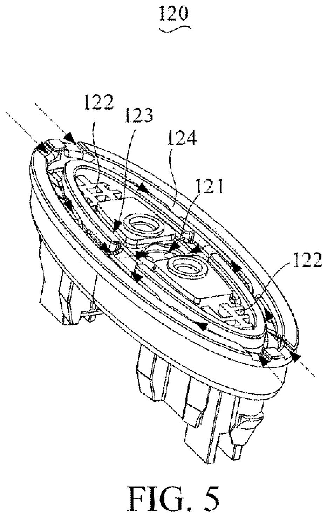

Referring to FIG. 5, in some embodiments, a liquid storage groove 122 is provided on a side of the atomization base 120 adjacent to the inner bottom surface 111, so that liquid flowing out of the air inlet hole 121 can flow into the liquid storage groove 122 under a capillary force. By providing the liquid storage groove 122 on the atomization base 120, the liquid flowing out of the air inlet hole 121 can flow into the liquid storage groove 122 under the capillary force and is stored in the liquid storage groove 122 without dripping onto the battery assembly 200, and the foregoing atomizer 100 is less prone to short circuits, thereby improving the safety performance.

In some embodiments, a liquid guide trench 123 is further provided on the side of the atomization base 120 adjacent to the inner bottom surface 111. The liquid guide trench 123 is located between the air inlet hole 121 and the liquid storage groove 122. The liquid guide trench 123 is configured to guide the liquid to flow out of the air inlet hole 121 into the liquid storage groove 122. The liquid storage groove 122 and the liquid guide trench 123 are provided on the atomization base 120, so that the liquid flowing out of the air inlet hole 121 is easier to flow into the liquid storage groove 122 through the liquid guide trench 123 and is stored in the liquid storage groove 122 without dripping onto the battery assembly 200, and the foregoing atomizer 100 is less prone to short circuits, thereby achieving better safety performance.

Referring to FIG. 5 (dashed arrows shown in FIG. 5 indicate directions of the flow of air), the liquid storage groove 122 has an opening facing the inner bottom surface 111. There is a spacing formed between a side of the liquid storage groove 122 adjacent to the inner bottom surface 111 and the inner bottom surface 111. By configuring the spacing between the side of the liquid storage groove 122 adjacent to the inner bottom surface 111 and the inner bottom surface 111, the liquid storage groove 122 is suspended above the inner bottom surface 111, thereby preventing the liquid flowing out of the air inlet hole 121 from reaching the inner bottom surface 111 through the liquid storage groove 122 due to the contact between an opening end of the liquid storage groove 122 and the inner bottom surface 111. It should be understood that, when the opening of the liquid storage groove 122 does not face the inner bottom surface 111, the side of the liquid storage groove 122 adjacent to the inner bottom surface 111 may be in contact with the inner bottom surface 111. In this case, the side of the liquid storage groove 122 adjacent to the inner bottom surface 111 may alternatively not be in contact with the inner bottom surface 111. In a specific embodiment, the liquid storage groove 122 has an opening, the opening of the liquid storage groove 122 faces an inner side wall of the housing 110, and one of groove walls forming the opening is connected to the liquid guide trench 123 to enable liquid in the liquid guide trench 123 to flow into the liquid storage groove 122. In this case, the side of the liquid storage groove 122 adjacent to the inner bottom surface 111 may be in contact with or spaced apart from the inner bottom surface 111. In the illustrated embodiment, a plurality of liquid storage grooves 122 are provided, and the plurality of liquid storage grooves 122 are adjacent to each other and are grid-shaped.

Referring to FIG. 4 and FIG. 5, in some embodiments, the bottom cover 114 has a hollow structure with one end opened and the other end closed. The atomization base 120 is located inside the bottom cover 114, an outer side wall of the atomization base 120 is sealingly connected to an inner side wall of the bottom cover 114. A side of the atomization base 120 adjacent to the bottom cover 114 and the bottom cover 114 cooperatively form an air inlet channel. The air inlet 112 is located on the side wall of the bottom cover 114 and is in communication with the air inlet channel. The air inlet channel is in communication with the air inlet hole 121. The liquid storage groove 122 is located between the air inlet channel and the air inlet hole 121, and the opening of the liquid storage groove 122 is in communication with the air inlet channel. It should be understood that, when the air inlet 112 is located on the bottom cover 114 and is adjacent to the top cover 113, or when the air inlet 112 is located on the top cover 113 to disable the air inlet 112 from being in direct communication with the air inlet channel, a channel may be provided on the atomization base 120 and/or another component, so as to communicate the air inlet 112 with the air inlet channel.

In the embodiment shown in FIG. 5, the air inlet hole 121 is located in a middle portion of the atomization base 120, and an air groove 124 is provided on a side of the atomization base 120 adjacent to the bottom cover 114. The air groove 124 is provided on an outer edge of the atomization base 120 adjacent to the inner bottom surface 111, and a groove wall of the air groove 124 is in contact with the bottom cover 114 to form the air inlet channel. A notch is provided on the groove wall of the air groove 124 adjacent to the air inlet hole 121, so that the air inlet channel is in communication with both the opening of the liquid storage groove 122 and the air inlet hole 121. In the illustrated embodiment, external air enters atomization base 120 from both sides thereof through air inlets 112 and then flows along the air groove 124 from the two sides into the air inlet hole 121 located in the middle portion. It should be understood that, in some embodiments, the air groove 124 may be omitted. In that case, as long as there is a gap between the atomization base 120 and the bottom cover 114 to be in communication with both the air inlet 112 and the air inlet hole 121, external air can flow into the air inlet hole 121 through the air inlet 112 and the gap. In other embodiments, the position of the air inlet hole 121 is not limited to be provided at the middle portion of the atomization base 120, and may be adjusted according to an actual situation.

In the illustrated embodiment, the air inlet hole 121 is a circular hole; and there are five air inlet holes 121. In other embodiments, the air inlet hole 121 is not limited to the circular hole, and may alternatively be in any shape. The number of air inlet holes 121 is not limited to five, and may alternatively be four, six or more.

In one embodiment, the top cover 113 is made of translucent plastic, the bottom cover 114 is made of stainless-steel (i.e., SPCC); and the atomization base 120 is made of plastic (for example, black plastic). SPCC refers to Cold Rolled Carbon Steel Sheets and Strip. In other embodiments, materials of both the top cover 113 and the atomization base 120 are not limited to the above materials, and may alternatively be other materials.

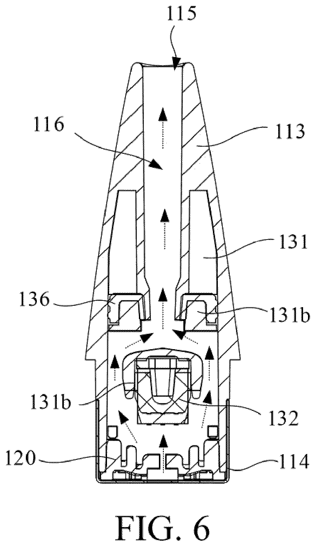

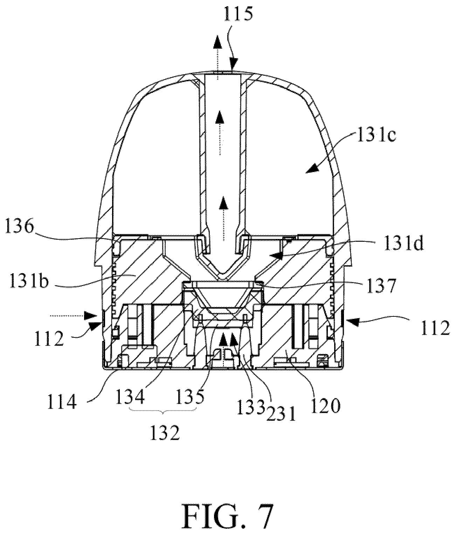

The atomization core 130 is configured to atomize the atomizing medium. In the illustrated embodiment, the atomization core 130 includes a heating assembly 132 and a liquid storage tank 131 that is configured to load the atomizing medium. The heating assembly 132 is mounted on the atomization base 120, and the heating assembly 132 and the atomization base 120 form an atomization cavity 133. The heating assembly 132 is configured to atomize the atomizing medium in the liquid storage tank 131. The atomization cavity 133 is in communication with the air inlet hole 121, the housing 110 is further provided with an air outlet 115 in communication with the atomization cavity 133. Referring to FIG. 6 and FIG. 7 (dashed arrows shown in FIG. 6 and FIG. 7 indicate directions of the flow of air), during use of the atomizer 100, the atomizing medium in the liquid storage tank 131 is atomized by the heating assembly 132 to form aerosol, which is then released into the atomization cavity 133. External air enters from the air inlet 112 and flows into the atomization cavity 133 through the air inlet hole 121 in communication with the air inlet 112, and the aerosol in the atomization cavity 133 then flows out of the air outlet 115 in communication with the atomizer 100 along with the air.

Referring to FIG. 7, the heating assembly 132 includes a liquid guide member 134 and a heating member 135 that is adjacent to the liquid guide member 134. The liquid guide member 134 is mounted on the atomization base 120, and the liquid guide member 134 is located between the liquid storage tank 131 and the heating member 135. The heating member 135 is located adjacent to the atomization cavity 133. The atomizing medium in the liquid storage tank 131 reaches the heating member 135 through the liquid guide member 134 and is atomized into aerosol by the heating member 135, then the aerosol is released into the atomization cavity 133. More specifically, the liquid storage tank 131 includes a tank opening, and the liquid guide member 134 is adjacent to the tank opening. An edge of the liquid guide member 134 adjacent to the tank opening is sealingly connected to a tank wall of the liquid storage tank 131, so that the atomizing medium flowing out of the tank opening of the liquid storage tank 131 can reach the heating member 135 through the liquid guide member 134.

In one embodiment, the liquid guide member 134 is a porous ceramic body. In other embodiment, the material of the liquid guide member 134 is not limited to porous ceramic, and it may alternatively be of another structure capable of guiding liquid.

In one embodiment, the liquid storage tank 131 includes a tank housing 131a and a tank cover 131b. The tank housing 131a includes a liquid storage cavity 131c, and the liquid storage cavity 131c includes an exit. The tank cover 131b is located on the atomization base 120. The tank housing 131a is sealingly connected to the tank cover 131b and covers the exit. A liquid outlet channel 131d is provided on the tank cover 131b. The liquid outlet channel 131d includes a liquid inlet and a liquid outlet in communication with the liquid inlet, and the liquid inlet is in communication with the exit. An edge of the liquid guide member 134 is sealingly connected to an end of the liquid outlet channel 131d adjacent to the liquid outlet. In the illustrated embodiment, there are two liquid outlet channels 131d, and the two liquid outlet channels 131d are spaced apart from each other. In other embodiments, the number of liquid outlet channels 131d is not limited to two, and may alternatively be another value. It should be understood that, in some embodiments, the tank housing 131a may be omitted. In that case, the top cover 113 and the tank cover 131b form the liquid storage tank configured to load the atomizing medium.

In some embodiments, the atomization core 130 further include a first sealing member 136. The first sealing member 136 is located between the tank housing 131a and the tank cover 131b, and is configured to seal a gap between the tank housing 131a and the tank cover 131b. In the illustrated embodiment, the first sealing member 136 is shaped substantially as a bottle cap. The first sealing member 136 covers the tank cover 131b, an outer side wall of the first sealing member 136 is sealingly connected to an inner wall of the tank housing 131a, and a through hole corresponding to the liquid outlet channel 131d is provided on the first sealing member 136. In one embodiment, the first sealing member 136 is made of silicone. In other embodiments, the material of the first sealing member 136 is not limited to silicone, and may alternatively be another material, such as rubber. It should be understood that, in some embodiments, the first sealing member 136 may be omitted. In that case, the tank cover 131b may be sealingly connected to the tank housing 131a. For example, the tank cover 131b may be made of silicone, and the tank cover 131b is directly sealingly connected to the tank housing 131a.

In some embodiments, the atomization core 130 further includes a second sealing member 137. The second sealing member 137 is located between the tank cover 131b and the liquid guide member 134, and is configured to seal a gap between the tank cover 131b and the liquid guide member 134. It should be understood that, in some embodiments, the second sealing member 137 may be omitted. In that case, the tank cover 131b may be sealingly connected to the liquid guide member 134. For example, the tank cover 131b may be made of silicone, and the tank cover 131b is directly sealingly connected to the liquid guide member 134.

In one embodiment, the atomizer 100 further includes an air outlet channel. The air outlet channel is configured to communicate the atomizer 100 with the air outlet 115. In the illustrated embodiment, a first channel for air venting is provided on the tank cover 131b, and a second channel for air venting is provided on the atomization base 120. The first channel is in communication with the second channel to form the air outlet channel. One end of the second channel is in communication with the atomization cavity 133, the other end of the second channel is in communication with the first channel, and one end of the first channel away from the second channel is in communication with the air outlet 115. In the illustrated embodiment, a third channel 116 is formed on the housing 110. One end of the third channel 116 is in communication with the first channel, and the other end of the third channel is in communication with the air outlet 115. It should be understood that, in other embodiments, the air outlet channel may be provided only on the atomization base 120 or may be provided only on the tank cover 131b, and specific adjustments may be made according to an actual situation.

In one embodiment, the battery assembly 200 is detachably connected to the atomizer 100. In some embodiments, the battery assembly 200 is magnetically connected to the atomizer 100. For example, a magnet is provided on a side of the atomization base 120 adjacent to the inner bottom surface 111, and an iron member (for example, an iron column) is provided in the battery assembly 200. The iron member and the magnet can attract to each other, so that the atomizer 100 and the battery assembly 200 can be assembled together under the action of magnetic attraction. In other embodiments, the battery assembly 200 and the atomizer 100 may alternatively be assembled together in another detachable connection manner.

Specifically, the battery assembly 200 includes a power supply 210 and a battery case 220. The power supply 210 is accommodated in the battery case 220, and the power supply 210 is electrically connected to the heating member 135 of the atomization core 130 through an electrical connector. In an embodiment, the electrical connector includes an ejector pin 231, and the bottom wall is provided with an ejector pin hole. The ejector pin 231 extends through the ejector pin hole, the atomization base 120, the atomization cavity 133, and is electrically connected to the heating member 135. The ejector pin 231 can move back and forth in an axial direction of the atomizer 100, so as to switch off or switch on an electrical connection to the heating member 135. In one embodiment, the atomizer 100 further includes a third sealing member configured to seal a gap between the ejector pin 231 and a hole wall forming the ejector pin hole. In one embodiment, when the housing 110 is omitted, the ejector pin 231 extends through the atomization base 120 and the atomization cavity 133 and is electrically connected to the heating member 135. In one embodiment, the ejector pin 231 is made of gold-plated brass.

A method for manufacturing the foregoing electronic atomization device 10 includes the following steps:
assembling the liquid storage tank 131, the heating assembly 132, and the atomization base 120 into the housing 110, to obtain the atomizer 100;
assembling the power supply 210 and the electrical connector into the battery case 220, to obtain the battery assembly 200; and
electrically connecting the ej ector pin 231 of the atomizer 100 to the power supply 210 of the battery assembly 200, to obtain the electronic atomization device 10.

Specifically, the step of assembling the liquid storage tank 131, the heating assembly 132, and the atomization base 120 into the housing 110 includes: sleeving the first sealing member 136 on the tank cover 131b and then sealingly connecting the tank cover to the tank housing 131a; sealingly connecting the tank cover 131b to the liquid guide member 134 through the second sealing member 137; mounting the atomization base 120 on the tank cover 131b and the heating assembly 132, and pressing the ejector pin 231 into the atomization base 120; and placing the atomization base 120 together with the heating assembly 132 and the liquid storage tank 131 that are mounted on the atomization base 120 on the bottom cover, and then covering with the top cover 113.

It should be understood that, the method for assembling the foregoing electronic atomization device is not limited to the above, and may alternatively be another method.

The technical features in the foregoing embodiments may be randomly combined. For concise description, not all possible combinations of the technical features in the embodiments are described. However, provided that combinations of the technical features do not conflict with each other, the combinations of the technical features are considered as falling within the scope described in this specification.

The foregoing embodiments only describe several implementations of the invention to facilitate specific and detailed understanding of the technical solutions of the invention, but cannot be construed as a limitation to the patent scope of the invention. It should be noted that, for a person of ordinary skill in the art, several transformations and improvements can be further made without departing from the idea of the invention. These transformations and improvements all fall within the protection scope of the invention. It is to be understood that, technical solutions obtained based on the technical solutions provided in the invention by a person skilled in the art through logical analysis, reasoning, or limited experimentation shall all fall within the protection scope of the appended claims of the invention. Therefore, the protection scope of the invention shall be subject to the content of the appended claims, and the specification and the accompanying drawings can be used to illustrate the content of the claims.

## Claims

1. An atomizer, comprising:
a housing comprising a side wall and a bottom wall connected to the side wall, wherein the side wall and the bottom wall form an accommodation cavity, the bottom wall comprises an inner bottom surface, and an air inlet is provided on the side wall;
an atomization base located in the accommodation cavity and adjacent to the inner bottom surface, wherein a gap is formed between the atomization base and the bottom wall, an air inlet hole is provided on the atomization base, and the air inlet hole is in communication with the air inlet through the gap; and
an atomization core located in the accommodation cavity and mounted on the atomization base, wherein the atomization core is in communication with the air inlet hole.

2. The atomizer according to claim 1, wherein a liquid storage groove is provided on one side of the atomization base adjacent to the inner bottom surface, liquid flowing out of the air inlet hole is capable of flowing into the liquid storage groove under a capillary force.

3. The atomizer according to claim 1, wherein a liquid storage groove and a liquid guide trench are provided on one side of the atomization base adjacent to the inner bottom surface, the liquid guide trench is located between the air inlet hole and the liquid storage groove, and the liquid guide trench is configured to guide liquid flowing out of the air inlet hole into the liquid storage groove.

4. The atomizer according to claim 2 or 3, wherein an opening of the liquid storage groove faces the inner bottom surface, and a spacing is formed between a side of the liquid storage groove adjacent to the inner bottom surface and the inner bottom surface.

5. The atomizer according to claim 2 or 3, wherein the housing comprises a top cover and a bottom cover, the top cover is detachably connected to the bottom cover, the top cover and the bottom cover cooperatively form the accommodation cavity configured to accommodate the atomization base and the atomization core, the inner bottom surface is a surface of the bottom cover adjacent to the atomization base; the liquid storage groove comprises an opening facing the bottom cover, a spacing is formed between a side of the liquid storage groove adjacent to the bottom cover and the bottom cover, and the air inlet is located on a side wall of the bottom cover, on a side wall of the top cover, or at a joint between the top cover and the bottom cover.

6. The atomizer according to claim 5, wherein the bottom cover has a hollow structure with one end opened and the other end closed; the atomization base is located inside the bottom cover, a side wall of the atomization base is sealingly connected to an inner side wall of the bottom cover, and a side of the atomization base adjacent to the bottom cover and the bottom cover form an air inlet channel; and the air inlet is located on the side wall of the bottom cover and is in communication with the air inlet channel, and the air inlet channel is in communication with the air inlet hole.

7. The atomizer according to claim 6, wherein the air inlet hole is located in a middle portion of the atomization base, and an air groove is provided on a side of the atomization base adjacent to the bottom cover; the air groove is in communication with the liquid guide trench, a groove wall of the air groove is in contact with the bottom cover to form the air inlet channel, the air groove is provided with a notch on the groove wall thereof adjacent to the air inlet hole, and the notch is configured to enable the air inlet channel to be in communication with both the opening of the liquid storage groove and the air inlet hole.

8. The atomizer according to claim 1, wherein a cross-section of the housing is elliptical, and an orthographic projection of the air inlet on the cross-section of the housing is located on a major axis of the elliptical cross-section.

9. The atomizer according to claim 8, wherein two air inlets are provided, and orthographic projections of the two air inlets on the cross-section of the housing coincide with endpoints of the major axis.

10. The atomizer according to claim 1, 2, 3, 6, 7, 8, or 9, wherein the atomization core comprises a heating assembly and a liquid storage tank configured to load an atomizing medium; the heating assembly is mounted on the atomization base, the heating assembly is configured to atomize the atomizing medium in the liquid storage tank, the heating assembly and the atomization base cooperatively form an atomization cavity; the air inlet hole is in communication with the atomization cavity, the housing is further provided with an air outlet, and the air outlet is in communication with the atomization cavity.

11. The atomizer according to claim 10, wherein the heating assembly comprises a liquid guide member and a heating member; the heating member is mounted on the atomization base, the liquid guide member is located between the liquid storage tank and the heating member; and the atomizing medium in the liquid storage tank reaches the heating member through the liquid guide member and is atomized by the heating member.

12. The atomizer according to claim 11, wherein the liquid storage tank comprises a tank housing and a tank cover; the tank housing comprises a liquid storage cavity having an exit; the tank cover is located on the atomization base, and the tank cover is sealingly connected to the tank housing and covers the exit; a liquid outlet channel is provided on the tank cover, the liquid outlet channel comprises a liquid inlet and a liquid outlet, the liquid inlet is in communication with the exit; an edge of the liquid guide member is sealingly connected to an end of the liquid outlet channel adjacent to the liquid outlet.

13. The atomizer according to claim 11, wherein the liquid guide member is a porous ceramic body.

14. The atomizer according to claim 12, wherein an air outlet channel is provided on the tank cover and/or the atomization base, the atomization cavity is in communication with the air outlet channel, and the air outlet channel is in communication with the air outlet.

15. An electronic atomization device, comprising: the atomizer according to any one of claims 1 to 14, and a battery assembly electrically connected to the atomization core.
